# EUROPEAN PATENT APPLICATION

(11) **EP 2 811 636 A1**
(43) Date of publication of application: **10.12.2014**
(21) Application number: 13743628.3
(22) Date of filing: 25.01.2013
(51) Int. Cl.: H02M 3/155, G05F 1/67, H02J 3/38, H02M 7/48

(54) **POWER CONVERSION DEVICE**

(30) Priority: 31.01.2012 JP 2012017412
(71) Applicant: Sanyo Electric Co., Ltd., Moriguchi-shi, Osaka 570-8677 (JP)
(72) Inventor: NORITAKE, Yoshinori, Osaka-shi, Osaka 540 540-6207 (JP); KAMIMURA, Tsuyoshi, Moriguchi-shi Osaka 570-8677 (JP); YAMAGISHI, Kiyoma, Moriguchi-shi Osaka 570-8677 (JP); OGAWA, Tomohiro, Moriguchi-shi Osaka 570-8677 (JP); SHIRAKAWA, Takashi, Moriguchi-shi Osaka 570-8677 (JP); ISHIDA, Takeo, Moriguchi-shi Osaka 570-8677 (JP)
(74) Representative: Appelt, Christian W.
(86) International application number: PCT/JP2013/051562
(87) International publication number: WO 2013/115090

(57) **Abstract**

[Problem] To provide a power conversion device capable of extracting a large amount of power from a solar cell even in low solar radiation.

[Solution] The power conversion device includes: a booster circuit 4 that boosts an output voltage from a solar cell 1; and an inverter circuit 5 that converts DC power boosted by the booster circuit 4 into AC power, and superposes the AC power to a commercial power 3. The booster circuit 4 performs a first boosting operation so that the output voltage from the solar cell 1 becomes a target voltage value Vm, and changes the target voltage value Vm each time a predetermined time Th elapses after the first boosting operation starts.

## Description

### Technical Field

The present invention relates to a power conversion device that converts DC power output from a solar cell into AC power and superposes the AC power to a commercial.

### Background Art

In the related art, a power conversion device that converts DC power output from a solar cell into AC power and links the AC power to a commercial power through a relay has been provided.

The power conversion device includes a booster circuit, an inverter circuit, a filter circuit, a relay, a control circuit, etc. The booster circuit boosts an output voltage from the solar cell, and the inverter circuit converts the DC power output from a DC power source through the booster circuit into AC power. Further, a high frequency component of the output current from the inverter circuit is removed by the filter circuit to generate AC power synchronized with an AC power waveform of the commercial power. The generated AC power is supplied to the commercial power through the relay connected between the filter circuit and the commercial power. Disconnection and connection of the power conversion device are performed by opening and closing of the relay. The control circuit is formed by a microcomputer, and assigns a signal to the inverter circuit and the relay to control operations of the inverter circuit and the relay.

The power conversion device that receives the power output from the solar cell performs an MPPT operation to extract the output power from the solar cell to the maximum. In the power conversion device, if the intensity of solar radiation becomes low, the output power from the solar cell decreases, and a P-V characteristic becomes flat. If the P-V characteristic becomes flat, the MPPT operation becomes difficult to perform. Thus, a power conversion device that operates so that the voltage of the solar cell becomes a predetermined target voltage value when the intensity of solar radiation is low and the output power from the solar cell is small has been proposed (Patent Document 1).
Patent Document 1: JP-A-H09-062386

### Summary of the Invention

### Problem to be Solved by the Invention

However, when the voltage of the solar cell is set to the target voltage value in the low solar radiation, it is difficult to follow a change of a maximum power point due to a change of the intensity of solar radiation, and thus, the power extracted from the solar cell decreases.

In order to solve the above-described problems, an object of the present invention is to provide a power conversion device capable of extracting a large amount of power from a solar cell even in low solar radiation.

### Means for Solving the Problem

In order to accomplish the above-described object, in a power conversion device of the present invention including: a booster circuit that boosts an output voltage from a solar cell; and an inverter circuit that converts DC power boosted by the booster circuit into AC power, and superposes the AC power to a commercial power, the booster circuit performs a first boosting operation so that the output voltage from the solar cell becomes a target voltage value, and changes the target voltage value each time a predetermined time elapses after the first boosting operation starts.

### Advantages of the Invention

According to the present invention, it is possible to provide a power conversion device capable of extracting a large amount of power from a solar cell even in low solar radiation.

### Brief Description of the Drawings

Fig. 1 is a configuration diagram illustrating a solar power generation system 100 according to a first embodiment.
Fig. 2 is a flowchart illustrating an operation of a booster circuit.
Fig. 3 is a diagram illustrating a P-V characteristic of a solar cell 1.

### Mode for Carrying Out the invention

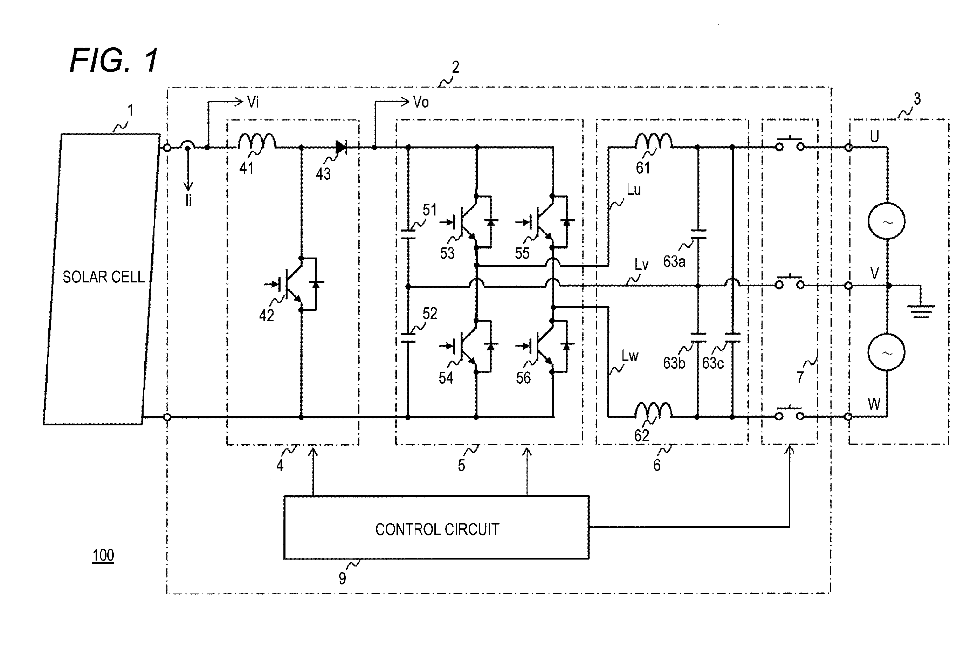

Hereinafter, embodiments of the present invention will be described in detail with reference to the accompanying drawings. Fig. 1 is a configuration diagram illustrating a solar power generation system 100 according to a first embodiment. As shown in Fig. 1, the solar power generation system 100 includes a solar cell (DC power source) 1 and a power conversion device 2.

The power conversion device 2 includes a booster circuit 4, an inverter circuit 5, a filter circuit 6, a relay 7, and a control circuit 9. The power conversion device 2 performs a linking operation of superposing a three-phase AC power output by the inverter circuit 5 to a commercial power 3 through the relay 7.

The commercial power 3 is a commercial power of a V wire connection having a U phase, a V phase, and a W phase, as shown in Fig. 1, in which the V phase is grounded. The U phase has a phase that is advanced by 120° with reference to the V phase, and the W phase has a phase that is delayed by 120° with reference to the V phase.

The booster circuit 4 boosts a DC voltage output from the solar cell 1. Further, the booster circuit 4 outputs the boosted DC voltage to the inverter circuit 5. As shown in Fig. 1, the booster circuit 4 includes a reactor 41, a switch element 42 such as an insulated gate bipolar transistor (IGBT), and a diode 43. To an input side of the booster circuit 4, the solar cell 1 is connected, and the reactor 41 and the diode 43 are serially connected to a cathode of the solar cell 1. The switch element 42 is connected between a connecting point of the reactor 41 and the diode 43 and an anode of the solar cell 1, and performs conduction and cutoff (switching) therebetween.

The operation of the booster circuit 4 is controlled by the control circuit 9. Specifically, the control circuit 9 determines an ON duty ratio, and periodically assigns a pulse signal having the ON duty ratio to a gate of the switch element 42. Then, the switch element 42 is periodically conducted and cut off, and thus, the booster circuit 4 obtains a booster ratio based on the ON duty ratio. An ON duty ratio Dr may be indicated as Dr=Ton/Ts when the cycle of the pulse signal is Ts and a time period of the conduction (ON) state of the switch element 42 is Ton. If the ON duty ratio increases, the booster ratio increases and the output voltage from the solar cell 1 decreases, and if the ON duty ratio decreases, the booster ratio decreases and the output voltage from the solar cell 1 increases.

The booster circuit 4 performs an MPPT operation (a second boosting operation) so that an output power P from the solar cell 1 becomes the maximum when an output current from the solar cell 1 is larger than a first current threshold value Im1. The MPPT operation is performed by calculating the power P by an input current Ii of the booster circuit 4 and an input voltage Vi of the booster circuit 4, and by adjusting the ON duty ratio so that the power P becomes the maximum.

For example, when the output current from the solar cell 1 is smaller than a second current threshold value Im2 at the time of the MPPT operation, when the output power P from the solar cell 1 is smaller than a second power threshold value Pm2, or when the booster circuit 4 starts from a stopped state, that is, when the output from the solar cell 1 is smaller than the second threshold values Im2 and Pm2, the booster circuit 4 performs a constant voltage operation (first boosting operation) so that the output voltage Vi from the solar cell 1 becomes a target voltage value Vm. The constant voltage operation is performed by feeding back the input voltage Vi, and by adjusting the ON duty ratio so that the input voltage Vi becomes the target voltage value Vm.

Details about the switching of the MPPT operation and the constant voltage operation will be described later.

The inverter circuit 5 has two capacitors 51 and 52, and plural switch elements 53 to 56, and converts the DC power output from the solar cell 1 through the booster circuit 4 into a three-phase AC power. The capacitors 51 and 52 are serially connected to each other to form a series circuit. The series circuit is connected to the diode 43 and the anode of the solar cell 1. Further, the switch element 53 and the switch element 54 are serially connected to each other to form a first arm circuit, and the switch element 55 and the switch element 56 are serially connected to each other to form a second arm circuit. The inverter circuit 5 forms a half-bridge type three-phase inverter circuit in which the series circuit, the first arm circuit, and the second arm circuit are respectively connected in parallel. Further, a connecting point of the two capacitors 51 and 52 of the series circuit is connected to a V phase line Lv, a connecting point of the two switch elements 53 and 54 of the first arm circuit is connected to a U phase line Lu, and a connecting point of the two switch elements 55 and 56 of the second arm circuit is connected to a W phase line Lw.

A switch element such as an IGBT may be used as the switch elements 53 to 56 of the inverter circuit 5. The inverter circuit 5 periodically performs conduction and cutoff (switching) of the respective switch elements 53 to 56 according to a pulse width modulation (PWM) control, and converts the DC power output from the solar cell 1 into the three-phase AC power. Thus, the inverter circuit 5 outputs the converted three-phase AC power to the three output lines Lu, Lv, and Lw. The operation of the inverter circuit 5 is controlled by the control circuit 9.

The filter circuit 6 includes reactors 61 and 62, and three filter capacitors 63a, 63b, and 63c. Further, the filter circuit 6 is connected to the connecting point of the switch element 51 and the switch element 52, the connecting point of the switch element 53 and the switch element 54, and the connecting point of the capacitor 51 and the capacitor 52 (and is provided on the output side of the inverter circuit 5). Specifically, the reactor 61 is disposed on the U phase line Lu, and the reactor 62 is disposed on the W phase line Lw. The respective filter capacitors 63a, 63b, and 63c are connected between the respective three output lines Lu, Lv, and Lw. Further, a capacitor having the same capacitance is used as the respective filter capacitors 63a to 63c. The filter circuit 6 divides the output current of the inverter circuit 5 into a capacitor current that flows in the filter capacitors 63a, 63b, and 63c, and a filter current that flows in the output lines Lu, Lv, and Lw. Thus, the filter current in which a harmonic component of the output current of the inverter circuit 5 is removed flows into the output lines Lu, Lv, and Lw on the side of the commercial power 3 from the filter circuit 6, and is thus supplied to the commercial power 30.

The relay 7 is disposed on the output lines Lu, Lv, and Lw connected to the commercial power 3 (disposed between the filter circuit 6 and the commercial power 3) to perform opening and closing of the output lines Lu, Lv, and Lw. The relay 7 is configured so that a closed state and an open state is controlled by a control signal from the control circuit 9, to connect (link) or disconnect the inverter circuit 5 to or from the commercial power 3.

The control circuit 9 is formed by a microcomputer, and controls the operations of the booster circuit 4, the inverter circuit 5, and the relay 7, as described above.

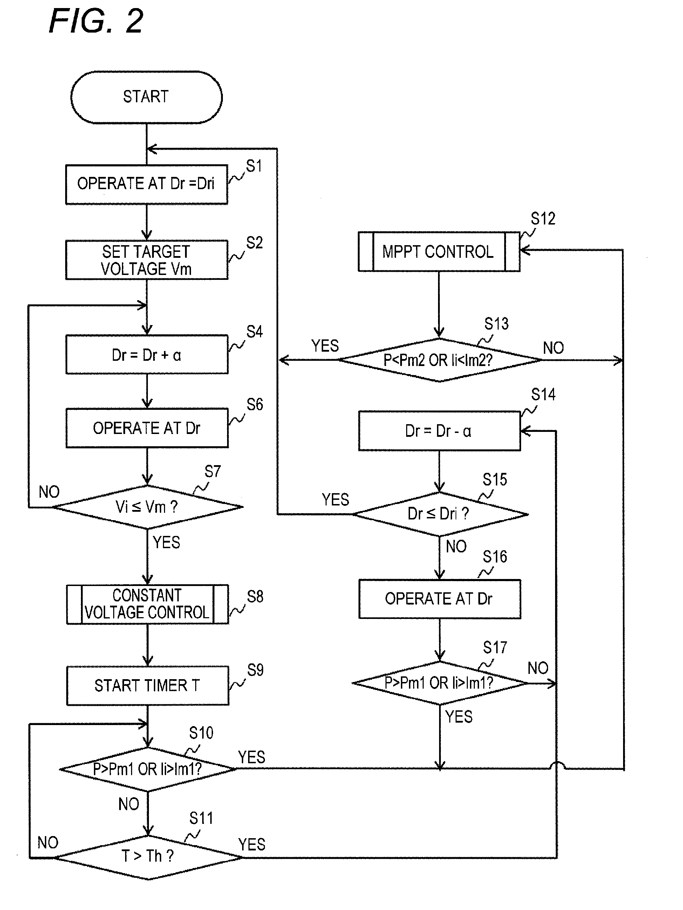

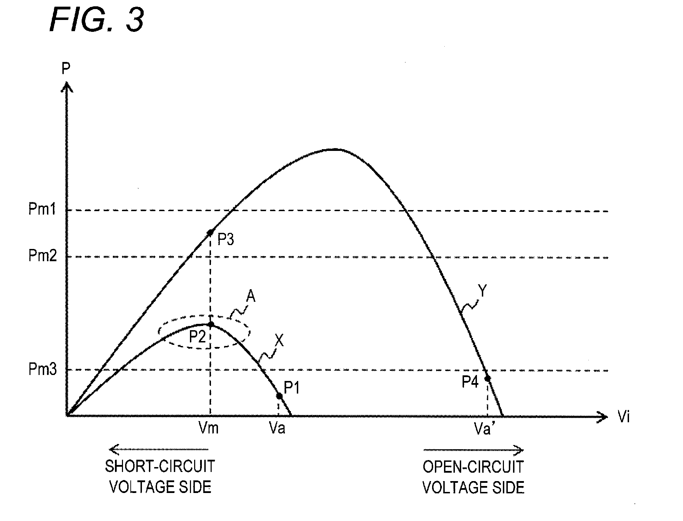

Next, the switching of the MPPT operation and the constant voltage operation of the booster circuit 4 in this example will be described in detail. Fig. 2 is a flowchart illustrating the operation of the booster circuit 4. Fig. 3 is a diagram illustrating a P-V characteristic of the solar cell 1. A transverse axis represents the output voltage Vi from the solar cell 1, and a longitudinal axis represents the output power P from the solar cell 1. A curve X represents a characteristic of low solar radiation where the booster circuit 4 cannot be MPPT-operated, and a curve Y represents a characteristic of high solar radiation where the booster circuit 4 can be MPPT-operated.

If the intensity of solar radiation to the solar cell 1 increases and the booster circuit 4 can be operated from the stopped state, the control circuit 9 starts the operation (switching of the switch element 42) of the booster circuit 4 from the ON duty ratio of a predetermined value Dri (step S1).

Then, the control circuit 9 performs setting of the target voltage value Vm (which is changed from the second time) (step S2). In step S2, first, the output voltage Vi from the solar cell 1 is measured, and an output voltage Va from the solar cell 1 when the booster circuit 4 is operated by the ON duty ratio of the predetermined value Dri is obtained. Further, the target voltage value Vm is calculated by multiplying the output voltage Va from the solar cell 1 with a predetermined value a. In this way, as the output voltage Va from the solar cell 1 when the booster circuit 4 is operated by the ON duty ratio of the predetermined value Dri increases, the target voltage value Vm becomes a large value.

Here, the predetermined value Dri is set so that the output voltage Va from the solar cell 1 when the booster circuit 4 is operated by the ON duty ratio of the predetermined value Dri is located on the side of an open-circuit voltage with reference to a maximum power point. Further, the predetermined value a is set to a value such that the value by which the voltage Va is multiplied is in the vicinity of the maximum power point (region A of a dashed line in Fig. 3) (0<a<1).

Then, in step S4, the control circuit 9 adds a predetermined value α to the ON duty ratio Dr, and operates the booster circuit 4 by the ON duty ratio increased by the predetermined value α (step S6), and then, the procedure proceeds to step S7.

In step S7, the control circuit 9 determines whether the output voltage Vi from the solar cell 1 is smaller than the target voltage value Vm. If the output voltage Vi from the solar cell 1 is smaller than the target voltage value Vm, the control circuit 9 can determine that the output voltage from the solar cell 1 reaches the target voltage value Vm, and thus, the control circuit 9 starts the constant voltage operation of the booster circuit 4 (step S8). Further, if the output voltage Vi from the solar cell 1 is larger than the target voltage value Vm, the control circuit 9 can determine that the output voltage from the solar cell 1 does not reach the target voltage value Vm, and then, the procedure returns to step S4. By repeating steps S4 to S7 to reach step S8, the ON duty ratio Dr gradually increases through steps from the predetermined value Dri, and as shown in Fig. 3, the output voltage Vi from the solar cell 1 gradually decreases to Vm from Va through steps (in which an operating point of the solar cell 1 moves to P2 from P1). Further, if the output voltage Vi from the solar cell 1 is equal to or smaller than the target voltage value Vm, the constant voltage operation starts.

If the constant voltage operation starts, the control circuit 9 resets a timer T and starts counting of the timer T. Then, the control circuit 9 determines whether the output power P from the solar cell 1 is larger than a first power threshold value Pm1 or whether the output current Ii from the solar cell 1 is larger than the first power threshold value Im1 (step S10). If any value P or Ii is larger than any threshold value Pm1 or Im1, the control circuit 9 determines that the MPPT operation of the booster circuit 4 is available, and causes the booster circuit 4 to start the MPPT operation (step S12). If the values P and Ii are respectively smaller than the threshold values Pm1 and Im1, the control circuit 9 determines that the MPPT operation of the booster circuit 4 is not available, and then, the procedure proceeds to step S11.

In step S11, the control circuit 9 determines whether a value of the timer T is larger than a time threshold value Th. If the value of the timer T is larger than the time threshold value Th (when a predetermined time elapses), the control circuit 9 determines that it is necessary to change the target voltage value Vm, and then, the procedure proceeds to step S14. Further, if the value of the timer T is smaller than the time threshold value Th (when a predetermined time does not elapse), the control circuit 9 determines that it is not necessary to change the target voltage value Vm, and then, the procedure returns to step S10.

In step S14, the control circuit 9 subtracts the predetermined value α from the ON duty ratio Dr, and determines whether the ON duty ratio Dr is smaller than the predetermined value Dri (step S15). If the ON duty ratio Dr is smaller than the predetermined value Dri, the control circuit 9 causes the procedure to return to step S1.

Further, if the ON duty ratio Dr is larger than the predetermined value Dri, the control circuit 9 operates the booster circuit 4 by the ON duty ratio Dr that decreases by the predetermined value α (step S16), and then, the procedure proceeds to step S17.

In step S17, the control circuit 9 determines whether the output power P from the solar cell 1 is larger than the first power threshold value Pm1 or whether the output current Ii from the solar cell 1 is larger than the first current threshold value Im1 (step S17). If any value P or Ii is larger than any threshold value Pm1 or Im1, the control circuit 9 determines that the MPPT operation of the booster circuit 4 is available, and causes the booster circuit 4 to start the MPPT operation (step S12). If the values P and Ii are respectively smaller than the threshold values Pm1 and Im1, the control circuit 9 determines that the MPPT operation of the booster circuit 4 is not available, and then, the procedure proceeds to step S14.

As the procedure proceeds to step S14 from step S11 and steps S14 to S17 are repeated to reach step S1, after the predetermined time elapses after the booster circuit 4 starts the constant voltage operation, the ON duty ratio Dr gradually decreases through steps from the ON duty ratio Dr operated by the constant voltage operation, and as shown in Fig. 3, the output voltage Vi from the solar cell 1 gradually decreases to Vi from Vm through steps (in which the operating point of the solar cell 1 moves to P1 from P2). Further, when the ON duty ratio Dr decreases to be equal to or smaller than the predetermined value Dri, the target voltage value Vm is changed (step S2).

As the procedure proceeds to step S14 from step S11 and steps S14 to S17 are repeated to reach step S12, after the predetermined time elapses after the booster circuit 4 starts the constant voltage operation, the ON duty ratio Dr gradually decreases from the ON duty ratio operated by the constant voltage operation, and when the output (output power P and output current Ii) from the solar cell 1 becomes larger than the first threshold value Pm1 or Im1 before the ON duty ratio Dr becomes equal to or lower than the predetermined value Dri, the MPPT operation starts.

Further, after the booster circuit 4 starts the MPPT operation, the control circuit 9 determines whether the output power P from the solar cell 1 is smaller than the second power threshold value Pm2 or whether the output current Ii from the solar cell 1 is smaller than the second current threshold value Im2. If any value P or Ii is smaller than any threshold value Pm2 or Im2, the control circuit 9 determines that the continuation of the MPPT operation is not available, and then, the procedure proceeds to step S1. When the values Pi and Ii are respectively larger than the threshold values Pm2 and Im2, the control circuit 9 determines that the continuation of the MPPT operation is available, and then, the procedure returns to step S12. Here, a value larger than the first current threshold value Im1 is set as the second current threshold value Im2.

In this way, the booster circuit 4 performs the switching of the constant voltage operation and the MPPT operation. Although an operation when the booster circuit 4 is stopped as the intensity of solar radiation further decreases is not shown in the flowchart, the booster circuit 4 may be stopped by appropriately determining that the output power P or the output current Ii from the solar cell 1 decreases.

As described above, according to the embodiment of the present invention, when a state where the output from the solar cell 1 after starting the constant voltage operation is smaller than the first threshold value is continued, that is, when the low solar radiation incapable of proceeding to the MPPT operation is continued, since the target voltage value is changed each time the predetermined time elapses according to the intensity of current solar radiation (output voltage Vi from the solar cell 1 when the booster circuit 4 is operated by the ON duty ratio of the predetermined value Dri), a large amount of power can be extracted from the solar cell 1 even in the low solar radiation.

Further, before the ON duty ratio Dr gradually decreases through steps from the ON duty ratio Dr operated by the constant voltage operation and becomes equal to or smaller than a predetermined value Dri, when the output current Ii from the solar cell 1 is larger than the first threshold value Im1, the booster circuit 4 starts the MPPT operation. Thus, when the ON duty ratio gradually decreases through steps, the operation can proceed to the MPPT operation even when the intensity of solar radiation increases. Thus, an opportunity to drive the solar cell 1 at an optimal operating point increases, and thus, a large amount of power can be extracted from the solar cell 1.

Further, before the ON duty ratio Dr gradually decreases through steps from the ON duty ratio Dr operated by the constant voltage operation and becomes equal to or smaller than the predetermined value Dri, when the output power P from the solar cell 1 is larger than the first power threshold value Pm1, the booster circuit 4 starts the MPPT operation. Thus, when the ON duty ratio gradually decreases through steps, the operation can proceed to the MPPT operation even when the intensity of solar radiation increases. Further, in the constant voltage operation, even when the intensity of solar radiation rapidly increases and the operating point of the solar cell 1 is changed to a short-circuit voltage side from the optimal operating point (maximum power point) so that the operation cannot proceed to the MPPT operation (for example, when the operating point moves from P2 to P3 shown in Fig. 3), since the solar cell 1 returns to an operating point P4 (operating point of the solar cell 1 when the booster circuit 4 is operated by the predetermined value Dri in the high solar radiation) through the optimal operating point, the output power P increases, so that the operation can proceed to the MPPT operation. Thus, the opportunity to drive the solar cell 1 at the optimal operating point increases, and thus, a large amount of power can be extracted from the solar cell 1.

Further, the target voltage value Vm is changed based on the output voltage Vi from the solar cell 1 when the booster circuit 4 is operated by the ON duty ratio Dr of the predetermined value Dri, and thus the target voltage value Vm can be changed without stopping the operation of the power conversion device 2 (while enabling power supply to the commercial power).

Further, since the second threshold value (Pm2, Im2) is larger than the first threshold value (Im1), it is possible to prevent the MPPT operation and the constant voltage operation from being carelessly repeated.

Hereinbefore, the embodiments of the present invention are described, but the above description is made for easy understanding of the present invention, and does not limit the present invention. The present invention may include various modifications or improvements in a range without departing from the spirit of the invention, and may include equivalents thereof.

For example, in the present embodiment, in steps S10, S13, and S15, both of the output current and the output power from the solar cell 1 are compared with the threshold values thereof, but any one thereof may be used.

Further, for example, in the present embodiment, the target voltage value Vm is determined according to the output voltage Vi from the solar cell 1 when the booster circuit 4 is operating by the ON duty ratio of the predetermined value Dri, however an open-circuit voltage of the solar cell 1 may be used. In this case, since the boosting cannot be performed by the booster circuit 4, the operation of the power conversion device 2 is stopped.

Further, for example, in the present embodiment, it is determined that the ON duty ratio Dr is equal to or smaller than the predetermined value Dri (step S15) to set the target voltage Vm, but it may be determined that the output (for example, power or current) from the solar cell 1 is smaller than a third threshold value smaller than the second threshold value (Pm2, Im) to set the target voltage Vm. In this case, when the determination is Yes in step S15, the procedure may return to step S1, and the ON duty ratio Dr may be changed to the predetermined value Dri to operate the booster circuit 4, and then, the procedure may proceed to step S2. Alternatively, the booster circuit 4 may be operated using the ON duty ratio Dr that is finally used (ON duty ratio when the output from the solar cell 1 is equal to or smaller than the third threshold value), and then, the procedure may proceed to step S2.

In addition, for example, in the present embodiment, the target voltage value Vm is calculated by measuring the output voltage Vi from the solar cell 1 and by multiplying the measured value by the predetermined value a, but may be calculated by subtracting a predetermined value b from the measured value, or may be calculated by various methods.

Furthermore, for example, in the present embodiment, each time the predetermined time Th elapses in the state where the output from the solar cell 1 is smaller than the first threshold value Pm1 or Im1 after the booster circuit 4 starts the constant voltage operation, the target voltage value Vm is changed, but the predetermined time Th may be variable. For example, as a value (specifically, the difference or ratio of the target voltage values Vm before change and after change, the difference or ratio of the output voltages from the solar cell 1 used when the target voltage values Vm before change and after change are calculated, or the like) indicating the change of the target voltage value Vm when the target voltage value Vm is changed becomes larger, the predetermined time Th may be set to become shorter. Thus, when the change of the intensity of solar radiation is large, the target value Vm can be rapidly changed.

Further, for example, in the present embodiment, when the constant voltage operation starts, the ON duty ratio Dr increases from the predetermined value Dri, and thus, the output voltage Vi from the solar cell 1 decreases to perform the constant voltage operation. Further, when the predetermined time Th elapses after performing the constant voltage operation, the ON duty ratio Dr decrease, and thus, the output voltage Vi from the solar cell 1 increases to change the target voltage value Vm. That is, by operating the ON duty ratio Dr of the pulse signal assigned to the switch element 42 of the booster circuit 4, the output voltage Vi from the solar cell 1 is changed. However, the output voltage Vi from the solar cell 1 may be changed using a voltage adjustment circuit different from the booster circuit 4.

In this case, when starting the constant voltage operation, the voltage adjustment circuit adjusts the output voltage Vi from the solar cell 1 to become a predetermined value Vs, gradually decreases the output voltage Vi from the solar cell 1, and starts the constant voltage operation when the output voltage Vi from the solar cell 1 is equal to or smaller than the target voltage value Vm. When the output from the solar cell 1 is not larger than the first threshold value even though the predetermined time Th elapses after the constant voltage operation starts, the voltage adjustment circuit gradually increases the output voltage Vi from the solar cell 1 operated by the constant voltage operation. Further, when the output voltage Vi from the solar cell 1 increases to be equal to or larger than the predetermined value Vs, the target voltage value is changed. The target voltage value Vi is changed based on the output voltage Vi from the solar cell 1 that is the predetermined value Vs. Further, when gradually increasing the output voltage Vi from the solar cell 1 after the predetermined time Th elapses, the voltage adjustment circuit starts the MPPT operation when the output from the solar cell 1 is larger than the first threshold value Im1 before the output voltage Vi from the solar cell 1 is equal to or larger than the predetermined value Vs.

### Description of Reference Signs

- 1: Solar Cell
- 2: Power Conversion Device
- 3: Commercial power
- 4: Booster Circuit
- 5: Inverter Circuit
- 6: Filter Circuit
- 7: Relay
- 9: Control Circuit

## Claims

1. A power conversion device comprising:
a booster circuit that boosts an output voltage from a solar cell; and
an inverter circuit that converts DC power boosted by the booster circuit into AC power, and superposes the AC power to a commercial power,
wherein the booster circuit performs a first boosting operation so that the output voltage from the solar cell becomes a target voltage value, and changes the target voltage value each time a predetermined time elapses after the first boosting operation starts.

2. The power conversion device according to claim 1,
wherein the booster circuit performs a second boosting operation so that the output voltage from the solar cell becomes a maximum value when an output from the solar cell is larger than a first threshold value, performs the first boosting operation when the output from the solar cell is smaller than a second threshold value that is equal to or smaller than the first threshold value, and changes the target voltage value each time the predetermined time elapses in a state where the output from the solar cell is smaller than the first threshold value after the first boosting operation starts.

3. The power conversion device according to claim 1 or 2,
wherein the booster circuit boosts the output voltage from the solar cell by switching a switch element while changing an ON duty ratio of the switch element, decreases the ON duty ratio to be equal to or smaller than a predetermined value from the ON duty ratio operated by the first boosting operation when changing the target voltage value, and changes the target voltage value based on the output voltage from the solar obtained when the ON duty ratio is decreased.

4. The power conversion device according to claim 1 or 2,
wherein the booster circuit boosts the output voltage from the solar cell by switching a switch element while changing an ON duty ratio of the switch element, decreases the ON duty ratio from the ON duty ratio operated by the first boosting operation when changing the target voltage value, and changes the target voltage value based on the output voltage from the solar cell obtained when the output from the solar cell is equal to or smaller than a third threshold value that is equal or smaller than the second threshold value.

5. The power conversion device according to claim 3 or 4,
wherein at decreasing the ON duty ratio, the ON duty ratio is gradually decreased.

6. The power conversion device according to claim 5,
wherein the booster circuit starts the second boosting operation when the output from the solar cell is larger than the first threshold value while the ON duty ratio is gradually decreased.

7. The power conversion device according to any one of claims 3 to 6,
wherein to start the first boosting operation, the switching starts from the ON duty ratio of the predetermined value and then the ON duty ratio is gradually increased, and when the output voltage from the solar cell is equal to or smaller than the target voltage value, the first boosting operation starts.

8. The power conversion device according to any one of claims 1 to 7,
wherein the predetermined time is set to become shorter as a value indicting the change of the target voltage value Vm obtained when the target voltage is changed becomes larger.
